(19) **Europäisches Patentamt**
**European Patent Office**
**Office européen des brevets**

(11) **EP 2 576 688 B1**

(12) **EUROPEAN PATENT SPECIFICATION**

(45) Date of publication and mention
of the grant of the patent:
**18.01.2017 Bulletin 2017/03**

(51) Int Cl.:
**C08L 23/06** (2006.01) **C08L 23/04** (2006.01)
**C08L 23/08** (2006.01)

(21) Application number: **11727844.0**

(86) International application number:
**PCT/US2011/037892**

(22) Date of filing: **25.05.2011**

(87) International publication number:
**WO 2011/150052 (01.12.2011 Gazette 2011/48)**

(54) **POLYMER COMPOSITIONS, METHODS OF MAKING THE SAME, AND ARTICLES PREPARED FROM THE SAME**

POLYMERZUSAMMENSETZUNGEN AUF ETHYLENBASIS, VERFAHREN ZU IHRER HERSTELLUNG UND ARTIKEL DARAUS

COMPOSITIONS DE POLYMERES, LEURS PROCEDES DE FABRICATION, ET ARTICLES PREPARES A PARTIR DE TELLES COMPOSITIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2010 US 348873 P**

(43) Date of publication of application:
**10.04.2013 Bulletin 2013/15**

(73) Proprietor: **Dow Global Technologies LLC**
**Midland, MI 48674 (US)**

(72) Inventors:
• **LIANG, Wenbin**
**Pearland, TX 77584 (US)**
• **LIU, Lizhi**
**Lake Jackson, TX 77566 (US)**

(74) Representative: **Boult Wade Tennant**
**Verulam Gardens**
**70 Gray's Inn Road**
**London WC1X 8BT (GB)**

(56) References cited:
**WO-A1-99/10415** **WO-A1-2008/112373**
**WO-A1-2009/097565** **WO-A1-2009/114661**
**US-A1- 2007 078 222**

EP 2 576 688 B1

**Description**

BACKGROUND OF THE INVENTION

Oil-extended or oil-containing thermoplastic elastomers (TPE) compositions are widely used for applications, such as automotive, consumer durables, sporting goods, health & hygiene, toys, and construction materials. Such compositions require oil to provide the desired soft feel, to improve processing, and to reduce the composition cost. However, it is often encountered that oil exudes, or bleeds out, of the fabricated articles, which may negatively affect the physical properties of the composition, such as causing surface stickiness and material brittleness. The oil exudation may even render the parts unacceptable in performance. The ability of a composition to retain oil is an even greater challenge when such compositions are used to form articles for use over long periods of time and/or articles subject to temperature fluctuations.

Attempts have been made to develop polyolefin-based compositions involving the use of conventional elastomers and rubbers. Polymers with high modulus or high temperature resistance, such as polypropylene, HDPE, and inorganic fillers, such as calcium carbonate, were also often added to "oil containing" compositions to enhance thermal resistance or mechanical strength. It is generally believed that amorphous elastomers may exhibit higher capacity to retain oil and to reduce oil bleeding compared to semi-crystalline polymers. Styrene-based thermoplastic elastomers have been added to elastomer compositions in order to increase the ability of the composition to retain oil. Similarly, elastomers with lower crystallinity have been used for the same purpose. However, the composition is often limited by the physical property (such as tensile strength) and processing requirements of the elastomer. Furthermore, at moderate oil levels, the use of polyolefin elastomer compositions with low crystallinity, the use of styrenic block copolymers, or the use of EPDM hydrocarbon rubbers, may exhibit moderate improvement in, or delay, the oil exudation. With increase levels of oil, severe oil exudation (bleed-out) still occurs with these compositions over time or through temperature fluctuation cycles, which adversely affects the performance properties of the formed articles.

There is a strong demand for soft and flexible thermoplastics, especially polyolefin-based compositions that can be used to form parts with significantly reduced, or without any, oil exudation for extended periods of time.

U.S. Patent 5,505,773 discloses a thioxtropic gel compositions comprising polybutene, polyethylene wax, hydrophobic fumed silica, and optionally, an antioxidant. These compositions do not contain substantial amounts of elastomers.

U.S. Patent 5,741,843 discloses sealant compositions comprising elastomeric thermoplastic polymers comprising diblock and triblock copolymers, a primary extender such as polybutene oil, a secondary extender, such as mineral oil, and/or fumed silica. The composition is believed to form an interpenetrating polymer network to reduce or eliminate exudation of the extender.

WO-A-2009/114661 discloses an ethylenic polymer material comprised of highly branched ethylene-based polymer substituents grafted to or free-radical polymerization generated ethylene-based long chain polymer branches originating from a radicalized site on the ethylene based polymer.

WO-A-99/10415 discloses a composition which is obtainable as the product of a process of reacting a poly(sulfonyl azide) with a polymer comprising steps (a) forming a first admixture, of a first amount of a first polymer or in a liquid which does not require removal from the polymer and a poly(sulfonyl azide); (b) then forming a second admixture of the first admixture with a second amount of at least one second polymer, and (c) heating the second admixture to the decomposition temperature of the coupling agent for a time sufficient to result in coupling of polymer chains.

Additional compositions are disclosed in the following: U.S. Patent Nos. 5,082,348; 7,101,247; 6,905,431; 5,994,450; 6,026,527; 6,835,015 and US 6,413,458, and U.S. Publication Nos. 2003/0236313 and 2004/0048018.

As discussed, there is a need to develop new compositions with significantly reduced oil bleed (rate), and which can be used to form articles with no, or no detectable, oil exudation. These needs and others have been met by the following invention.

SUMMARY OF THE INVENTION

The invention provides a composition comprising at least the following:

A) an ethylene-based polymer having at least the following characteristics: (i) a melting temperature of greater than, or equal to, 100°C, as determined by DSC, (ii) a molecular weight ratio, Mz(abs)/Mz(conv) greater than 2.2 as determined by GPC and (iii) a molecular weight distribution (Mw(conv)/Mn(conv)) of greater than, or equal to 7 as determined by GPC; and
B) an oil.

BRIEF DESCRIPTION OF THE DRAWINGS

Figure 1 represents optical images of three interfaces, each formed from an "oil-containing elastomeric polymer composition" and the inner surface of a plastic bag.

Figure 2 is a bar graph depicting Gloss at 60° (%) for an inventive example and several comparative examples.

Figure 3 depicts melt strength profiles for an inventive example and several comparative examples.

Figure 4 is a bar graph depicting Gloss at 60° (%) for some inventive and comparative examples.

DETAILED DESCRIPTION OF THE INVENTION

Overview

As discussed above, the invention provides a composition comprising at least the following:

A) an ethylene-based polymer having at least the following characteristics: (i) a melting temperature of greater than, or equal to, 100°C, as determined by DSC, and (ii) a molecular weight ratio, Mz(abs)/Mz(conv) greater than 2.2, (iii) a molecular weight distribution (Mw(conv)/Mn (conv)) of greater than, or equal to 7 as determined by GPC; and

B) an oil.

An inventive composition may comprise a combination of two or more embodiments as described herein.

In one embodiment, the ethylene-based polymer has a percent crystallinity greater than 28%, as determined by DSC.

In one embodiment, the ethylene-based polymer has a number average molecular weight (Mn(conv)) greater than 2800 g/mole.

In one embodiment, the ethylene-based polymer, Component A, has a MR value less than 200 g/10 min, where MR = I2 x RR.

In one embodiment, the ethylene-based polymer, Component A, has a molecular weight ratio (Mz(abs)/Mz(conv)) greater than, or equal to, 2.5, preferably greater than, or equal to, 2.9. An Mz(abs)/Mz(conv) ratio of 2.2 or higher indicates a highly branched polymer.

In one embodiment, the ethylene-based polymer, Component A, is a low density polyethylene (LDPE), an ethylene vinylacetate (EVA), or an ethylene acrylic acid (EAA), and preferably a low density polyethylene (LDPE).

In one embodiment, the ethylene-based polymer, Component A, has a density from 0.900 to 0.940 g/cc, preferably from 0.905 to 0.935, more preferably from 0.910 to 0.930 g/cc (1 cc = 1 cm$^3$).

In one embodiment, the ethylene-based polymer, Component A, has melt index (I2) from 0.1 to 50 g/10 min, preferably from 0.2 to 30 g/10 min, more preferably from 0.3 to 25 g/10 min.

In one embodiment, the ethylene-based polymer, Component A, is present in an amount from 2 to 50 weight percent, based on the weight of the composition.

In one embodiment, the oil is present in an amount from 10 to 70 weight percent, based on the weight of the composition.

In one embodiment, the oil is present in an amount from 35 to 90 weight percent, based on the sum weight of the ethylene-based polymer and the oil.

In one embodiment, the oil is present in an amount from 35 to 70 weight percent, based on the sum weight of the ethylene-based polymer and the oil.

In one embodiment, the oil is present in an amount from 35 to 50 weight percent, based on the sum weight of the ethylene-based polymer and the oil.

In one embodiment, the composition further comprises an olefin-based polymer.

In one embodiment, the olefin-based polymer is present in an amount from 40 to 90 weight percent, based on the weight of the composition.

In one embodiment, the olefin-based polymer is a second ethylene-based polymer. In a further embodiment, the second ethylene-based polymer is selected from the group consisting of ethylene/$\alpha$-olefin multiblock interpolymers, and preferably copolymers; homogeneously branched substantially linear ethylene/$\alpha$-olefin interpolymers, and preferably copolymers; homogeneously branched linear ethylene/$\alpha$-olefin interpolymers, and preferably copolymers; and polyethylene homopolymers.

It has been discovered that, in comparison to compositions of the prior art, the compositions of this invention unexpectedly exhibit superior oil retaining ability, with significantly reduced oil bleed, or completely eliminated oil bleed, while exhibiting desirable thermal and mechanical properties suitable for the targeted applications. The inventive compositions also show improved surface-staining resistance and improved resistance to imprint. Furthermore, fabricated articles formed from the inventive compositions retain desirable, low-gloss surface for extended period of time.

The compositions of this invention provide superior mechanical strength compared with compositions using oil-reducing additives of prior art. Fabricated flexible or soft articles made of compositions of this invention allows the articles to be used for applications which require higher mechanical strength, including tensile strength, tear strength, as well as good mechanical integrity. The ethylene-based polymer component contributes to the overall mechanical strength of the fabricated articles, unlike other low molecular weight additives of prior arts.

**Inventive Composition**

As discussed above, an inventive composition comprises:

A) an ethylene-based polymer having at least the following characteristics: (i) a melting temperature of greater than, or equal to, 100°C, as determined by DSC, and (ii) a molecular weight ratio, $Mz(abs)/Mz(conv)$ greater than 2.2, (iii) a molecular weight distribution ($Mw(conv)/Mn(conv)$) of greater than, or equal to 7, as determined by GPC; and
B) an oil.

In one embodiment, the ethylene-based polymer has a molecular weight ratio ($Mz(abs)/Mz(conv)$), greater than, or equal to, 2.3, preferably greater than, or equal to, 2.5, and more preferably greater than, or equal to, 2.9, as determined by GPC.

In one embodiment, the ethylene-based polymer has a molecular weight ratio ($Mz(abs)/Mz(conv)$) less than, or equal to, 15, preferably less than, or equal to, 12, and more preferably less than, or equal to, 7.0, as determined by GPC.

In one embodiment, the ethylene-based polymer has a density from 0.900 to 0.940 g/cc, preferably from 0.905 to 0.935 g/cc, and more preferably from 0.910 to 0.930 g/cc (1 cc = 1 cm3).

In one embodiment, the ethylene-based polymer has a melt index (I2) from 0.1 to 50 g/10 min, preferably from 0.2 to 30 g/10 min, and more preferably from 0.3 to 25 g/10 min.

In one embodiment, the ethylene-based polymer has a melt index (I2) from 0.1 to 12 g/10 min, preferably from 0.2 to 10 g/10 min, and more preferably from 0.3 to 7 g/10 min.

In one embodiment, the ethylene-base polymer is formed from a high pressure, free radical process. In a further embodiment, the ethylene-based polymer is formed by high pressure autoclave or tubular process.

In one embodiment, the ethylene-based polymer is selected from a low density polyethylene (LDPE), an ethylene vinyl acetate (EVA), or an ethylene acrylic acid (EAA). In a further embodiment, the ethylene-based polymer is selected from a low density polyethylene (LDPE), or an ethylene vinylacetate (EVA). In a further embodiment, the ethylene-based polymer is a LDPE. Suitable LDPE resins are available from The Dow Chemical Company.

In one embodiment, the ethylene-based polymer has a percent crystallinity greater than, or equal to, 28 percent, preferably greater than, or equal to, 30 percent, and more preferably greater than, or equal to, 35 percent, as determined by DSC.

In one embodiment, the ethylene-based polymer has a percent crystallinity less than, or equal to, 50 percent, preferably less than, or equal to, 48 percent, and more preferably less than, or equal to, 46 percent, as determined by DSC.

In one embodiment, the ethylene-based polymer has a melting point, Tm, greater than, or equal to, 104°C, preferably greater than, or equal to, 106°C, and more preferably greater than, or equal to, 108°C, as determined by DSC.

In one embodiment, the ethylene-based polymer has a melting point, Tm, less than, or equal to, 128°C, preferably less than, or equal to, 125°C, and more preferably less than, or equal to, 122°C, as determined by DSC.

The ethylene-based polymer has a molecular weight distribution ($Mw(conv)/Mn(conv)$), greater than, or equal to 7, and preferably greater than, or equal to, 9, as determined by GPC.

In one embodiment, the ethylene-based polymer has a molecular weight distribution ($Mw(conv)/Mn(conv)$), less than, or equal to, 50, preferably less than, or equal to, 45, more preferably less than, or equal to, 30, and even more preferably less than, or equal to, 20, as determined by GPC.

In one embodiment, the ethylene-based polymer has a molecular weight ($Mn(conv)$), greater than, or equal to, 2800 g/mole preferably greater than, or equal to, 4000, and more preferably greater than, or equal to, 8,000, as determined by GPC.

In one embodiment, the ethylene-based polymer has a molecular weight ($Mn(conv)$), less than, or equal to, 30,000 g/mole preferably less than, or equal to, 25,000, and more preferably less than, or equal to, 22,000, as determined by GPC.

In one embodiment, the ethylene-based polymer has a "MR" less than, or equal to, 200 g/10 min, preferably less than, or equal to, 150 g/10 min, and more preferably less than, or equal to, 125 g/10 min, and even more preferably less than, or equal to, 100 g/10 min. Here M is the melt index (12, 2.16 kg, 190°C) in g/10 min, and R is the rheology ratio (RR) or V0.1/V100, where V0.1 is the melt viscosity of polymer at 190°C, measured at a shear rate of 0.1 rad/sec, and V100 is the melt viscosity of polymer at 190°C, measured at a shear rate of 100 rad/sec. Melt viscosities are measured under a nitrogen atmosphere, using a dynamic mechanical spectrometer (such as a RMS-800 or ARES from Rheometrics), under a dynamic sweep made from 0.1 to 100 rad/sec.

In one embodiment, the ethylene-based polymer has a "MR" greater than, or equal to, 10, preferably greater than, or equal to, 12, and more preferably greater than, or equal to, 14.

In one embodiment, the ethylene-based polymer has Mw(conv) greater than 20,000 g/mol, preferably greater than 40,000 g/mol, more preferably greater than 60,000 g/mol; a rheology ratio (RR) greater than 15, preferably greater than 30; and a percent crystallinity of greater 30, preferably greater than 32, and more preferably greater than 35, as determined by DSC.

In one embodiment, the ethylene-based polymer is present in an amount from 2 to 50 weight percent, preferably from 5 to 45 weight percent, and more preferably from 7 to 40 weight percent, based on the weight of the composition.

An ethylene-based polymer may comprise a combination of two or more embodiments as described herein.

Examples of oils include, but are not limited to, mineral oils or processing oils (may include paraffinic, naphthenic, aromatic or mixed types), or other processing or softening additives such as plasticizers and polybutene. Oils include, but are not limited to, petroleum oils, such as aromatic and naphthenic oils; polyalkylbenzene oils; synthetic oils, mineral oils, organic acid monoesters, such as alkyl and alkoxyalkyl oleates and stearates; organic acid diesters, such as dialkyl, dialkoxyalkyl, and alkyl aryl phthalates, terephthalates, sebacates, adipates, and glutarates; glycol diesters, such as tri-, tetra-, and polyethylene glycol dialkanoates; trialkyl trimellitates; trialkyl, trialkoxyalkyl, alkyl diaryl, and triaryl phosphates; chlorinated paraffin oils; coumarone-indene resins; pine tars; vegetable oils, such as castor, tall, rapeseed, and soybean oils and esters and epoxidized derivatives thereof.

In one embodiment, the oil is selected from petroleum oils, synthetic oils, chlorinated paraffin oils, paraffinic mineral oil, white mineral oil or vegetable oils, and preferably selected from paraffinic mineral oil, or white mineral oil.

In one embodiment, the oil is present in an amount from 10 to 70 weight percent, preferably from 15 to 65 weight percent, and more preferably from 20 to 60 weight percent, based on the weight of the composition.

In one embodiment, the oil is present in an amount from 15 to 50 weight percent, preferably from 15 to 65 weight percent, and more preferably from 20 to 45 weight percent, based on the weight of the composition.

In one embodiment, the oil is present in an amount from 35 to 90 weight percent, preferably from 40 to 90 weight percent, and more preferably from 45 to 90 weight percent, based on the sum weight of the ethylene-based polymer and the oil.

In one embodiment, the oil is present in an amount from 45 to 90 weight percent, preferably from 50 to 85 weight percent, and more preferably from 55 to 80 weight percent, based on the sum weight of the ethylene-based polymer and the oil.

In one embodiment, the composition further comprises an olefin-based polymer as described below.

In one embodiment, the inventive composition further comprises a styrenic block copolymer.

In one embodiment, the inventive composition further comprises a halogenated ethylene/α-olefin (C3-C8 or higher) copolymer.

In one embodiment, the inventive composition further comprises one or more additives. Suitable additives include, but are not limited to, antioxidants, UV stabilizers, vulcanizing agents, foaming agents, flame retardants, plasticizers, pigments, curing agents and combinations thereof, and preferably antioxidants, UV stabilizers, flame retardants, pigments and combinations thereof, and more preferably antioxidants, UV stabilizers and combinations thereof.

In one embodiment, the composition further comprises one or more inorganic filler(s). In a further embodiment, the filler is selected from calcium carbonate, fumed silica, alumina, TiO2, kaolin, or combinations thereof.

In one embodiment, the composition comprises from 0.1 to 50 weight percent of an inorganic filler, based on the weight of the composition.

In one embodiment, the inventive composition further comprises one or more antioxidants and/or stabilizers.

In one embodiment, the composition comprises a second ethylene-based polymer as described herein, and a propylene-based polymer, as described herein. In a further embodiment, the composition further comprises a polyethylene homopolymer as described herein.

In one embodiment, the composition comprises two second ethylene-based polymers, each independently described herein. In a further embodiment, the composition further comprises a polyethylene homopolymer as described herein.

In one embodiment, the composition comprises a second ethylene-based polymer as described herein, and a polyethylene homopolymer as described herein.

In one embodiment, the composition is prepared using batch compounding processes such as Banbury mixers; continuous melt mixing/compounding processes, such as single screw extruders, twin screw extruders; roll mills; HAAKE-type mixers, and other processes known in the art.

An inventive composition may comprise a combination of two or more embodiments as described herein.

*Olefin-based Polymers*

In one embodiment, the inventive composition further comprises an olefin-based polymer, as discussed above. Olefin-based polymers include ethylene-based polymers and propylene-based polymers.

In one embodiment, the composition comprises 10 to 80 weight percent, preferably from 15 to 60 weight percent, and more preferably from 20 to 50 weight percent of an olefin-based polymer, based on the weight of the composition.

In one embodiment, the olefin-based polymer is selected from polypropylene homopolymer, propylene/$\alpha$-olefin copolymer, propylene/ethylene copolymer, or high density polyethylene (HDPE).

In one embodiment, the olefin-based polymer has a melt index (I2, 2.16 kg, 190°C) or a melt flow rate (MFR, 2.16 kg, 230°C) less than 25 g/10 min, preferably less than 10 g/10 min, more preferably less than 5 g/10min, most preferably less than 2 dg/min or lower.

In one embodiment, the olefin-based polymer has a melt index (I2, 2.16 kg, 190°C) or a melt flow rate (MFR, 2.16 kg, 230°C) greater than, or equal to, 0.05 g/10 min, preferably greater than, or equal to, 0.1 g/10 min, more preferably greater than, or equal to, 0.5 g/10 min.

In one embodiment, the olefin-based polymer has a RR less than 12, preferably less than 10; and a percent crystallinity greater than 40 percent, as determined by DSC. In a further embodiment, the olefin-based polymer is selected from polypropylene homopolymer, propylene/$\alpha$-olefin copolymer, propylene/ethylene copolymer, or polyethylene homopolymer.

In one embodiment, the olefin-based polymer has a melt index (I2, 2.16 kg, 190°C) less than, or equal to, 0.9 dg/min, preferably less than, or equal to, 0.8 dg/min; and has a MWD (measured by GPC) of less than, or equal to, 3.5, preferably less than, or equal to, 3.0.

An olefin-based polymer may comprise a combination of two or more embodiments as described herein.

In one embodiment, the olefin-based polymer is a propylene-based polymer.

In one embodiment, the propylene-based polymer has a density from 0.840 to 0.920 g/cc, preferably from 0.845 to 0.910 g/cc (1 cc = 1 cm$^3$).

In one embodiment, the propylene-based polymer has a melt flow rate (MFR) from 0.05 to 20 g/10 min, preferably from 0.1 to 10 g/10 min, more preferably from 0.2 to 5 g/10 min.

In one embodiment, the propylene-based polymer is present in an amount from 1 to 30 weight percent, preferably from 2 to 25 weight percent, and more preferably from 5 to 20 weight percent, based on the weight of the composition.

In one embodiment, the propylene-based polymer, is present in an amount from 40 to 60 weight percent, preferably from 45 to 55 weight percent, and more preferably from 48 to 52 weight percent, based on the sum weight of the ethylene-based polymer and the propylene-based polymer.

An propylene-based polymer may comprise a combination of two or more embodiments as described herein.

In one embodiment, the olefin-base polymer is a second ethylene-based polymer.

In one embodiment, the second ethylene-based polymer has a density from 0.850 to 0.960 g/cc, preferably from 0.855 to 0.955 g/cc, more preferably from 0.860 to 0.950 g/cc (1 cc = 1 cm$^3$).

In one embodiment, the second ethylene-based polymer has a melt index (I2) from 0.05 to 20 g/10 min, preferably from 0.1 to 10 g/10 min, more preferably from 0.2 to 5 g/10 min.

In one embodiment, the second ethylene-based polymer has molecular weight distribution (Mw(conv)/Mn(conv)) from 1.1 to 5, preferably from 1.1 to 4, more preferably from 1.1 to 3, as determined by GPC.

In one embodiment, the second ethylene-based polymer is a polyethylene homopolymer, for example HDPE.

In one embodiment, the polyethylene homopolymer has a density from 0.940 to 0.970 g/cc, preferably from 0.945 to 0.960 g/cc.

In one embodiment, the polyethylene homopolymer has a melt index (I2) from 0.01 to 70 g/10 min, preferably from 0.02 to 35 g/10 min, more preferably from 0.04 to 20 g/10 min, and even more preferably from 0.05 to 10 g/10 min.

In one embodiment, the polyethylene homopolymer has a melt index (I2) from 0.01 to 10 g/10 min, preferably from 0.02 to 5 g/10 min, more preferably from 0.04 to 2 g/10 min, and even more preferably from 0.05 to 1 g/10 min.

In one embodiment, the polyethylene homopolymer, is present in an amount from 5 to 40 weight percent, preferably from 6 to 35 weight percent, and more preferably from 7 to 30 weight percent, based on the weight of the composition.

In one embodiment, the polyethylene homopolymer is present in an amount from 50 to 85 weight percent, preferably from 55 to 80 weight percent, and more preferably from 60 to 75 weight percent, based on the sum weight of the ethylene-based polymer and the polyethylene homopolymer.

In one embodiment, the second ethylene-based polymer is selected from an ethylene/$\alpha$-olefin interpolymer, and preferably an ethylene/$\alpha$-olefin copolymer; an ethylene/$\alpha$-olefin/diene interpolymer, and preferably an ethylene/$\alpha$-olefin/diene terpolymer; or an ethylene/$\alpha$-olefin multiblock interpolymer, and preferably an ethylene/$\alpha$-olefin multiblock copolymer.

Typically and preferably, the ethylene is copolymerized with one C3-C20 $\alpha$-olefin, and preferably one C3-C10 α-olefin. Preferred comonomers include propene, 1-butene, 1-pentene, 1-hexene, 1-heptene and 1-octene, and more preferably include propene, 1-butene, 1-hexene and 1-octene.

In one embodiment, the second ethylene-based polymer is present in an amount from 10 to 55 weight percent, preferably from 15 to 50 weight percent, and more preferably from 18 to 47 weight percent, based on the weight of the composition.

In one embodiment, the second ethylene-based polymer, is present in an amount from 40 to 90 weight percent, preferably from 45 to 85 weight percent, and more preferably from 50 to 80 weight percent, based on the sum weight of the ethylene-based polymer and the second ethylene-based polymer.

Commercial examples of second ethylene-base interpolymers include ENGAGE Polyolefin Elastomers, ATTANE Polyethylene Resins, AFFINITY Polyolefin Plastomers, DOWLEX Polyethylene Resins, ELITE Polyethylene Resins, and INFUSE Olefin Block Copolymers, each available from The Dow Chemical Company; EXCEED and EXACT polymers available from ExxonMobil Chemical Company; and TAFMER polymers available from the Mitsui Chemical Company.

A second ethylene-based polymer may comprise a combination of two or more embodiments as described herein.

In one embodiment, the second ethylene-based polymer is an ethylene/α-olefin interpolymer, and preferably an ethylene/α-olefin copolymer.

Illustrative α-olefins include propylene, 1-butene, 1-pentene, 1-hexene, 4-methyl-1-pentene, 1-heptene, 1-octene, 1-nonene and 1-decene. The α-olefin is desirably a C3-C10 α-olefin. Preferably, the α-olefin is propylene, 1-butene, 1-hexene or 1-octene. Illustrative copolymers include ethylene/propylene (EP) copolymers, ethylene/butene (EB) copolymers, ethylene/hexene (EH) copolymers, ethylene/octene (EO) copolymers. Preferred copolymers include EP, EB, EH and EO polymers.

In one embodiment, the ethylene/α-olefin interpolymer has a melting point (Tm) greater than, or equal to, 25°C, preferably greater than, or equal to, 30°C, more preferably greater than, or equal to, 34°C. In a further embodiment, the ethylene/α-olefin interpolymer is an ethylene/α-olefin copolymer.

In one embodiment, the ethylene/α-olefin interpolymer has a melting point (Tm) less than, or equal to, 95°C, preferably less than, or equal to, 90°C, more preferably less than, or equal to, 85°C. In a further embodiment, the ethylene/α-olefin interpolymer is an ethylene/α-olefin copolymer.

In one embodiment, the ethylene/α-olefin interpolymer has a melting point (Tm) less than, or equal to, 70°C, preferably less than, or equal to, 65°C, more preferably less than, or equal to, 62°C. In a further embodiment, the ethylene/α-olefin interpolymer is an ethylene/α-olefin copolymer.

In one embodiment, the ethylene/α-olefin interpolymer has a density from 0.850 to 0.890 g/cc, preferably from 0.855 to 0.880 g/cc. In a further embodiment, the ethylene/α-olefin interpolymer is an ethylene/α-olefin copolymer.

In one embodiment, the ethylene/α-olefin interpolymer has a melt index (I2) from 0.02 g/10 min to 30 g/10 min, preferably from 0.05 g/10 min to 15 g/10 min, more preferably from 0.1 g/10 min to 10 g/10 min. In a further embodiment, the ethylene/α-olefin interpolymer is an ethylene/α-olefin copolymer.

In one embodiment, the ethylene/α-olefin interpolymer has a melt index (I2) from 0.02 g/10 min to 10 g/10 min, preferably from 0.05 g/10 min to 5 g/10 min, more preferably from 0.1 g/10 min to 2 g/10 min. In a further embodiment, the ethylene/α-olefin interpolymer is an ethylene/α-olefin copolymer.

In one embodiment, the ethylene/α-olefin interpolymer has molecular weight distribution (Mw(conv)/Mn(conv)) from 1.1 to 4, preferably from 1.1 to 3.5, more preferably from 1.1 to 3, as determined by GPC. In a further embodiment, the ethylene/α-olefin interpolymer is an ethylene/α-olefin copolymer.

In one embodiment, the ethylene/α-olefin interpolymer is a homogeneously branched linear interpolymer, and preferably a copolymer; or a homogeneous branched substantially linear interpolymer, and preferably a copolymer.

In one embodiment, the ethylene/α-olefin interpolymer is a homogeneously branched linear interpolymer, and preferably a copolymer.

In one embodiment, the ethylene/α-olefin interpolymer is homogeneous branched substantially linear interpolymer, and preferably a copolymer.

The terms "homogeneous" and "homogeneously-branched" are used in reference to an ethylene/α-olefin interpolymer, in which the α-olefin comonomer is randomly distributed within a given polymer molecule, and all of the polymer molecules have the same or substantially the same comonomer-to-ethylene ratio.

The homogeneously branched linear ethylene interpolymers are ethylene polymers, which lack long chain branching, but do have short chain branches, derived from the comonomer polymerized into the interpolymer, and which are homogeneously distributed, both within the same polymer chain, and between different polymer chains. These ethylene/α-olefin interpolymers have a linear polymer backbone, no measurable long chain branching, and a narrow molecular weight distribution. This class of polymers is disclosed for example, by Elston in US Patent No. 3,645,992, and subsequent processes to produce such polymers, using bis-metallocene catalysts, have been developed, as shown, for example, in EP 0 129 368; EP 0 260 999; US Patent No. 4,701,432; US Patent No. 4,937,301; US Patent No.

4,935,397; US Patent No. 5,055,438; and WO 90/07526.

Commercial examples of homogeneously branched linear ethylene/$\alpha$-olefin interpolymers include TAFMER polymers supplied by the Mitsui Chemical Company, and EXACT and EXCEED polymers supplied by ExxonMobil Chemical Company.

The homogeneously branched substantially linear ethylene/$\alpha$-olefin interpolymers are described in US Patent Nos. 5,272,236; 5,278,272; 6,054,544; 6,335,410 and 6,723,810. The substantially linear ethylene/$\alpha$-olefin interpolymers have long chain branching. The long chain branches have the same comonomer distribution as the polymer backbone, and can have about the same length as the length of the polymer backbone. "Substantially linear," typically, is in reference to a polymer that is substituted, on average, with "0.01 long chain branches per 1000 carbons" to "3 long chain branches per 1000 carbons." The length of a long chain branch is longer than the carbon length of a short chain branch, formed from the incorporation of one comonomer into the polymer backbone.

The homogeneously branched substantially linear ethylene/$\alpha$-olefin interpolymers form a unique class of homogeneously branched ethylene polymers. They differ substantially from the well-known class of conventional, homogeneously branched linear ethylene/$\alpha$-olefin interpolymers, as discussed above, and, moreover, they are not in the same class as conventional heterogeneous "Ziegler-Natta catalyst polymerized" linear ethylene polymers (for example, ultra low density polyethylene (ULDPE), linear low density polyethylene (LLDPE) or high density polyethylene (HDPE) made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

The homogeneously branched, substantially linear ethylene/$\alpha$-olefin interpolymers have excellent processability, even though they have a relatively narrow molecular weight distribution. Surprisingly, the melt flow ratio ($I_{10}/I_2$), according to ASTM D 1238, of the substantially linear ethylene interpolymers can be varied widely, and essentially independently of the molecular weight distribution (Mw/Mn or MWD). This surprising behavior is contrary to conventional homogeneously branched linear ethylene interpolymers, such as those described, for example, by Elston in U.S. 3,645,992, and heterogeneously branched conventional "Ziegler-Natta polymerized" linear polyethylene interpolymers, such as those described, for example, by Anderson et al., in U.S. 4,076,698. Unlike substantially linear ethylene interpolymers, linear ethylene interpolymers (whether homogeneously or heterogeneously branched) have rheological properties, such that, as the molecular weight distribution increases, the $I_{10}/I_2$ value also increases.

Long chain branching can be determined by using $^{13}C$ Nuclear Magnetic Resonance (NMR) spectroscopy, and can be quantified using the method of Randall (Rev. Macromol. Chem. Phys., C29 (2 &3), 1989, p. 285-297). Two other methods are Gel Permeation Chromatography, couple with a Low Angle Laser Light Scattering detector (GPCLALLS), and Gel Permeation Chromatography, coupled with a Differential Viscometer detector (GPC-DV). The use of these techniques for long chain branch detection, and the underlying theories, have been well documented in the literature. See, for example, Zimm, B.H. and Stockmayer, W.H., J. Chem. Phys., 17,1301(1949) and Rudin, A., Modern Methods of Polymer Characterization, John Wiley & Sons, New York (1991) pp. 103-112.

In contrast to "substantially linear ethylene polymer," "linear ethylene polymer" means that the polymer lacks measurable or demonstrable long chain branches, that is, the polymer is substituted with an average of less than 0.01 long chain branches per 1000 carbons.

The homogeneous branched ethylene polymers will preferably have a single melting peak, as measured using Differential Scanning Calorimetry (DSC), in contrast to heterogeneously branched linear ethylene polymers, which have two or more melting peaks, due to the heterogeneously branched polymer's broad branching distribution.

In one embodiment, the ethylene/$\alpha$-olefin interpolymer has a PRR (Processing Rheology Ratio) greater than, or equal to 4, preferably greater than, or equal to, 8, more preferably greater than, or equal to, 12, even more preferably greater than, or equal to, 15. In a further embodiment, the ethylene/$\alpha$-olefin interpolymer is an ethylene/$\alpha$-olefin copolymer.

In one embodiment, the ethylene/$\alpha$-olefin interpolymer has a PRR from 4 to 70, or from 8 to 70. In a further embodiment, the ethylene/$\alpha$-olefin interpolymer is an ethylene/$\alpha$-olefin copolymer.

In one embodiment, the ethylene/$\alpha$-olefin interpolymer has a PRR from 12 to 60, preferably from 15 to 55, and more preferably from 18 to 50. In a further embodiment, the ethylene/$\alpha$-olefin interpolymer is an ethylene/$\alpha$-olefin copolymer.

Interpolymer viscosity is conveniently measured in poise (dyne-second/square centimeter (d-sec/cm2)) at shear rates within a range of 0.1-100 radian per second (rad/sec), at 190°C, under a nitrogen atmosphere, using a dynamic mechanical spectrometer (such as a RMS-800 or ARES from Rheometrics), under a dynamic sweep made from 0.1 to 100 rad/sec. The viscosities at 0.1 rad/sec and 100 rad/sec may be represented, respectively, as "V0.1" and "V100," with a ratio of the two referred to as "RR," and expressed as "V0.1/V100."

The PRR value is calculated by the formula:

$$PRR = RR + [3.82 - \text{interpolymer Mooney Viscosity (ML1+4 at 125°C)}] \times 0.3.$$

The PRR determination is described in U.S. Patent 6,680,361 (see also equivalent WO 00/26268).

In one embodiment, the ethylene/α-olefin interpolymer, and preferably copolymer, is present in an amount from 15 to 40 weight percent, preferably from 20 to 35 weight percent, and more preferably from 25 to 30 weight percent, based on the eight of the composition.

In one embodiment, the ethylene/α-olefin interpolymer, is present in an amount from 40 to 90 weight percent, preferably from 50 to 85 weight percent, and more preferably from 60 to 80 weight percent, based on the sum weight of the ethylene-based polymer and the ethylene/α-olefin interpolymer.

An ethylene/α-olefin interpolymer may comprise a combination of two or more embodiments as described herein.

An ethylene/α-olefin copolymer may comprise a combination of two or more embodiments as described herein.

In one embodiment, the second ethylene-based polymer is an ethylene/α-olefin/diene interpolymer, and preferably an ethylene/α-olefin/diene terpolymer.

The ethylene/α-olefin/diene interpolymers have polymerized therein C2 (ethylene), at least one α-olefin and a diene. Suitable examples of α-olefins include the C3-C20 α-olefins. Suitable examples of suitable dienes include the C4-C40 nonconjugated dienes.

Illustrative nonconjugated dienes are straight chain acyclic dienes, such as 1,4-hexadiene and 1,5-heptadiene; branched chain acyclic dienes, such as 5-methyl-1,4-hexadiene, 2-methyl-1,5-hexadiene, 6-methyl-1,5-heptadiene, 7-methyl-1,6-octadiene, 3,7-dimethyl-1,6-octadiene, 3,7-dimethyl-1,7-octadiene, 5,7-dimethyl-1,7-octadiene, 1,9-decadiene, and mixed isomers of dihydromyrcene; single ring alicyclic dienes such as 1,4-cyclohexadiene, 1,5-cyclooctadiene and 1,5-cyclododecadiene; multi-ring alicyclic fused and bridged ring dienes, such as tetrahydroindene, methyl tetrahydroindene; alkenyl, alkylidene, cycloalkenyl and cycloalkylidene norbornenes such as 5-methylene-2-norbomene (MNB), 5-ethylidene-2-norbornene (ENB), 5-vinyl-2-norbornene, 5-propenyl-2-norbornene, 5-isopropylidene-2-norbornene, 5-(4-cyclopentenyl)-2-norbornene, and 5-cyclohexylidene-2-norbornene. The diene is preferably a nonconjugated diene selected from the group consisting of ENB, dicyclopentadiene, 1,4-hexadiene, 7-methyl-1,6-octadiene, and preferably, ENB, dicyclopentadiene and 1,4-hexadiene, more preferably ENB and dicyclopentadiene, and even more preferably ENB.

The α-olefin is preferably a C3-C20 aliphatic compound, preferably a C3-C16 aliphatic compound, and more preferably a C3-C10 aliphatic compound. Preferred C3-C10 aliphatic α-olefins are selected from the group consisting of propylene, 1-butene, 1-hexene and 1-octene, and more preferably propylene. In a preferred embodiment, the interpolymer is an EPDM interpolymer. In a further embodiment, the diene is 5-ethylidene-2-norbornene (ENB).

Some examples of ethylene/α-olefin/diene interpolymers include the NORDEL IP Hydrocarbon Rubbers from The Dow Chemical Company.

In a preferred embodiment, the ethylene/α-olefin/diene interpolymer comprises a majority amount of polymerized ethylene, based on the weight of the interpolymer.

In one embodiment of the invention, the ethylene/α-olefin/diene interpolymer has a molecular weight distribution (Mw(conv)/Mn(conv)) from 2.0 to 3.0, preferably from 2.0 to 2.8 and more preferably from 2.0 to 2.5. In a further embodiment, the interpolymer is an ethylene/propylene/diene interpolymer, and further an EPDM terpolymer. In a further embodiment, the diene is ENB.

In one embodiment, the ethylene/α-olefin interpolymer has a density from 0.850 to 0.880 g/cc, preferably from 0.855 to 0.875 g/cc. In a further embodiment, the interpolymer is an ethylene/propylene/diene interpolymer, and further an EPDM terpolymer. In a further embodiment, the diene is ENB.

In one embodiment, the ethylene/α-olefin interpolymer has a melt index (I2) from 0.01 g/10 min to 1 g/10 min, preferably from 0.02 g/10 min to 0.5 g/10 min. In a further embodiment, the interpolymer is an ethylene/propylene/diene interpolymer, and further an EPDM terpolymer. In a further embodiment, the diene is ENB.

In one embodiment, the ethylene/α-olefin/diene interpolymer has a Mooney viscosity, ML(1+4) at 125°C, from 20 to 200, preferably from 40 to 150. In a further embodiment, the interpolymer is an ethylene/propylene/diene interpolymer, and further an EPDM terpolymer. In a further embodiment, the diene is ENB.

Mooney viscosity is that of the neat interpolymer (or-calculated viscosity of neat polymer for polymers that contain a filler, such as carbon black, and/or an oil). The neat polymer refers to the polymer without filler and without oil.

An ethylene/α-olefin/diene interpolymer may comprise a combination of two or more embodiments as described herein.

In one embodiment, the second ethylene-based polymer is an ethylene/α-olefin multi-block interpolymer, and preferably an ethylene/α-olefin multi-block copolymer.

Ethylene/α-olefin multi-block interpolymers, and preferably copolymers, may be made with two catalysts, incorporating differing quantities of comonomer, and a chain shuttling agent. Preferred α-olefins include propylene, 1-butene, 1-pentene, 1-hexene, 4-methyl-1-pentene, 1-heptene, 1-octene, 1-nonene and 1-decene. The α-olefin is desirably a C3-C10 α-olefin. Preferably, the α-olefin is propylene, 1-butene, 1-hexene or 1-octene.

An ethylene/α-olefin multi-block copolymer has one or more of the following characteristics:

(1) an average block index greater than zero and up to 1.0 and a molecular weight distribution, Mw/Mn, greater than 1.3; or

(2) at least one molecular fraction which elutes between 40°C and 130°C when fractionated using TREF, characterized in that the fraction has a block index of at least 0.5 and up to 1; or

(3) an Mw/Mn from 1.7 to 3.5, at least one melting point, Tm, in degrees Celsius, and a density, d, in grams/cubic centimeter, wherein the numerical values of Tm and d correspond to the relationship:

$$Tm > -6553.3 + 13735(d) - 7051.7(d)^2; \text{ or}$$

(4) an Mw/Mn from 1.7 to 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

ΔT > -0.1299(ΔH) + 62.81 for ΔH greater than zero and up to 130 J/g,

ΔT ≥ 48°C for ΔH greater than 130 J/g,

wherein the CRYSTAF peak is determined using at least 5 percent of the cumulative polymer, and if less than 5 percent of the polymer has an identifiable CRYSTAF peak, then the CRYSTAF temperature is 30°C; or

(5) an elastic recovery, Re, in percent at 300 percent strain and 1 cycle measured with a compression-molded coated substrate of the ethylene/α-olefin interpolymer, and has a density, d, in grams/cubic centimeter, wherein the numerical values of Re and d satisfy the following relationship when ethylene/α-olefin interpolymer is substantially free of a crosslinked phase: Re >1481-1629(d); or

(6) a molecular fraction which elutes between 40°C and 130°C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/α-olefin interpolymer; or

(7) a storage modulus at 25°C, G'(25°C), and a storage modulus at 100°C, G'(100°C), wherein the ratio of G'(25°C) to G'(100°C) is in the range of 1:1 to 9:1.

The term "multi-block copolymer" or "segmented copolymer" refers to a polymer comprising two or more chemically distinct regions or segments (referred to as "blocks") preferably joined in a linear manner, that is, a polymer comprising chemically differentiated units, which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

In one embodiment, the ethylene/α-olefin multi-block copolymer has a density of from 0.850 g/cc to 0.900 g/cc, preferably from 0.855 to 0.890 g/cc, more preferably from 0.860 to 0.885 g/cc. Density is measured by the procedure of ASTM D-792-08.

In one embodiment, the ethylene/α-olefin multi-block copolymer has a melting point of greater than 90°C, preferably greater than 100°C, more preferably greater than 110°C. The melting point is measured by Differential Scanning Calorimetry (DSC) method described in U.S. Patent 7608668 (WO 2005/090427), incorporated herein by reference.

In another embodiment, the ethylene/α-olefin multi-block copolymer has a melt index (I2) from 0.05 g/10 min to 10 g/10 min, preferably from 0.1 g/10 min to 5 g/10 min, and more preferably from 0.2 g/10 min to 2 g/10 min, as determined using ASTM D-1238-04 (190°C, 2.16 kg load).

In one embodiment, the ethylene/α-olefin multiblock interpolymer, and preferably copolymer, is present in an amount from 10 to 55 weight percent, preferably from 15 to 50 weight percent, and more preferably from 20 to 45 weight percent, based on the weight of the composition.

In one embodiment, the ethylene/α-olefin multiblock interpolymer, and preferably copolymer, is present in an amount from 40 to 90 weight percent, preferably from 45 to 85 weight percent, and more preferably from 50 to 80 weight percent, based on the sum weight of the ethylene-based polymer and the ethylene/α-olefin multiblock interpolymer.

The ethylene multi-block copolymers and their preparation and use, are more fully described in WO 2005/090427, US2006/0199931, US7608668, US2006/0199914, US2006/0199912, US7671106, US7579408, US2006/0199908, US7355089, US7622529, US7671131, US7524911, US7662881, US2006/0199887, US7514517, US7666918, US7687442, US7582716, US7504347 and US2006/0199983.

An ethylene/α-olefin multi-block interpolymer may comprise a combination of two or more embodiments as described herein.

An ethylene/α-olefin multi-block copolymer may comprise a combination of two or more embodiments as described herein.

**Articles**

The invention also provides an article comprising at least one component formed from an inventive composition. The inventive composition can be used for articles that require flexibility, wear resistance, and desirable appearance. Articles include, but not limited to, appliance gaskets and other consumer durables, automotive door seals and instrument panels, window profile seals, sporting goods, health & hygiene, and toys. The thermoplastic elastomer compositions of this invention are suitable for application in, but not limited to, appliance gaskets and other consumer durables, automotive door seals and instrument panels, window profile seals, sporting goods, health & hygiene, toys, and other applications that require flexibility, wear resistance, and desirable appearance.

In one embodiment, the article is a foamed profile extruded article. In a further preferred embodiment, the article is a weather-strip.

In one embodiment, the article is an automotive part.

In one embodiment, the article is a hose.

In one embodiment, the article is a flooring material.

In one embodiment, the article is a thermoplastic vulcanizates (TPV).

In one embodiment, the article is a footwear component, such a shoe inner sole or shoe outer sole.

Articles suited for these applications may be fabricated through injection molding, over-molding, blow-bolding, compression molding, extrusion, profile extrusion, casting, calendaring, and other processes.

An inventive article may comprise a combination of two or more embodiments as described herein.

DEFINITIONS

The term "polymer," as used herein, refers to a polymeric compound prepared by polymerizing monomers, whether of the same or a different type. The generic term polymer thus embraces the term homopolymer (employed to refer to polymers prepared from only one type of monomer), and the term interpolymer as defined hereinafter.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term "olefin-based polymer," as used herein, refers to a polymer that comprises, in polymerized form, a majority weight percent of an olefin, for example ethylene or propylene (based on the weight of the polymer), and optionally one or more other comonomers.

The term "ethylene-based polymer," as used herein, refers to a polymer that comprises, in polymerized form, a majority weight percent of ethylene (based on the weight of the polymer), and optionally one or more other comonomers.

The term, "ethylene/α-olefin interpolymer," as used herein, refers to an interpolymer that comprises a majority amount of polymerized ethylene monomer (based on the weight of the interpolymer), and at least one α-olefin. As used in the context of this disclosure, ethylene/α-olefin interpolymer excludes ethylene/α-olefin multi-block interpolymers.

The term, "ethylene/α-olefin copolymer," as used herein, refers to a copolymer that comprises a majority amount of polymerized ethylene monomer (based on the weight of the copolymer), and an α-olefin, as the only two monomer types. As used in the context of this disclosure, ethylene/α-olefin copolymer excludes ethylene/α-olefin multi-block copolymers.

The term, "propylene-based polymer," as used herein, refers to a polymer that comprises a majority amount of polymerized propylene monomer (based on the weight of the polymer), and optionally may comprise one or more comonomers.

The term "composition," as used herein, includes a mixture of materials, which comprise the composition, as well as reaction products and decomposition products formed from the materials of the composition.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

TEST METHODS

Melt index (I2) of an ethylene-based polymer is measured in accordance with ASTM D-1238-04, condition 190°C/2.16 kg. Melt index (I5) of an ethylene-based polymer is measured in accordance with ASTM D-1238-04, condition 190°C/5.0 kg. Melt index (I10) of an ethylene-based polymer is measured in accordance with ASTM D-1238-04, condition 190°C/10.0 kg. High load melt index (I21) of an ethylene-based polymer is measured in accordance with ASTM D-1238-04, condition 190°C/21.0 kg. For propylene-based polymers, the melt flow rate (MFR) is measured in accordance with ASTM D-1238-04, condition 230°C/2.16 kg.

Polymer density is measured in accordance with ASTM D-792-08.

*Differential Scanning Calorimetry (DSC)*

Differential Scanning Calorimetry (DSC) can be used to measure crystallinity in ethylene-based polymer (PE) and a propylene-based polymer (PP). About 5 to 8 mg of the polymer sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -60°C for PE (-40°C for PP), and keptsiothermally at that temperature for three minutes. The sample is next heated at a rate of 10°C/min, until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (for example, % cryst. = ($H_f$ / 292 J/g) x 100 (for PE)). The melting point(s) (Tm) of each polymer sample is determined from the second heat curve obtained from DSC, as described above. The crystallization temperature (Tc) is measured from the first cooling curve.

*Oil Exudation - Plastic Bag Test*

Oil exudation ranking were obtained using a plastic zipper storage bag. An injection-molded plaque (10.2cm x 15.2cm (4 inches x 6 inches)) was placed into the plastic bag (approximately 17.8cm x 20.3cm (7 inches x 8 inches) in dimension), with the plaque surface in contact with the inner surface of the plastic bag, at room temperature. Most of the air was squeezed out of the bag, by pressing the bag with the sample on a flat surface, and the zipper was pressed to lock the bag, with the plaque sample inside the bag. The oil exudation/bleeding was evaluated by examining the plaque/plastic bag interface. The rank value of "0" meant no sign of any oil wetting, "10" meant complete wetting of surface due to oil bleed; other ranking values represented approximate degrees of oil bleed, with lower numbers indicating less oil bleed. The degree of wetting, a measure of the oil bleed, is a function of diffusion time and temperature.

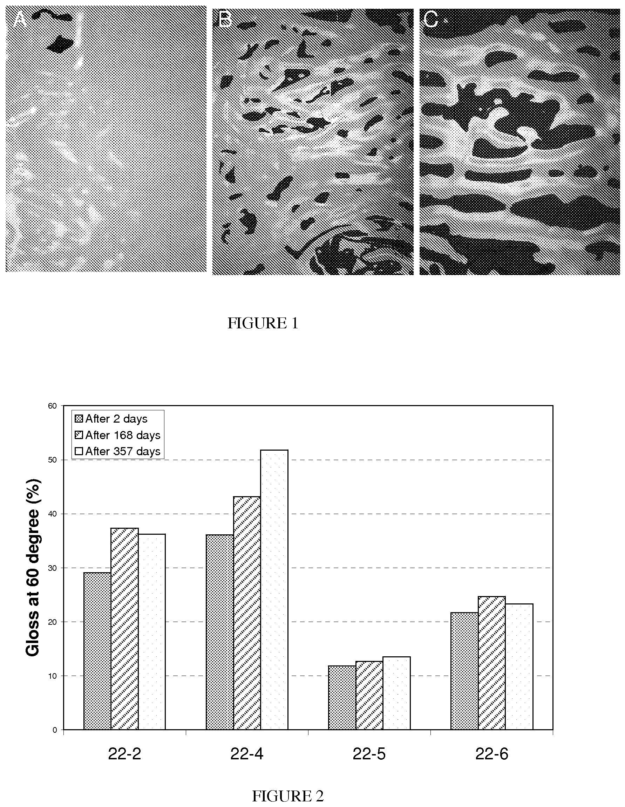

Figure 1 shows the optical images of the three plaque/bag interfaces. The oil-wet contact areas between the plaque and the bag were manually masked (in black) and rated. Figure 1 A was given an oil-bleed rating of 0-1, Figure 1 B was given an oil-bleed rating of 3-4, and Figure 1 C was given an oil-bleed rating of 7-8.

The images shown in Figure 1 were also examined using a image processing software SPIP (Image Metrology, Denmark) that distinguishes and quantifies the color/shade of each pixel on the micrograph. An intensity (brightness) distribution histogram was generated by the software. The black pixels formed a separated histogram peak, which was integrated to give the area of the black pixels. Figure 1 A had a black pixel percentage of less than 1 %, Figure 1 B had a black pixel percentage of about 16%, and Figure 1C has a black pixel percentage of about 38%.

*B) Cigarette-Paper for Measurement of Oil Exudation (Oil Bleeding) - Percent Shade Change*

This test was designed to measure relative rate of oil bleed from injection or compression molded samples. The test is described below. injection or compression molded samples were cut to into bars of approximately "7.6cm x 15.6cm x 0.32cm (3 inch x 6-1/8 inch x 0.125 inch)" bars, within two hours after molding. For each polymer composition, the number of bars tested was three, and an average rating was reported.

Each test bar was overlaid with three pieces of zigzag cigarette paper 2.54cm (1 inch in width), laid side-to-side, with the length direction of the paper aligned perpendicular to the length direction of the test bar. A sheet of MYLAR film was placed on exposed side of the paper, to create a "MYLAR - paper - test bar" test configuration. The test configuration was placed in an oven (air convection oven) maintained at specified temperature, with the MYLAR film in contact with a flat metal support placed inside the oven. There was no mass on top of the test bar, and thus, the force on the paper was due to the mass of the bar and gravity.

The bar was then aged for specified durations (for example, 24 hours, 1 week, 2 weeks or 3 or 4 weeks). After a determined period of time, one of the three papers was removed from the bar, and the bar was returned to the oven. After another determined time period, a second paper was removed from the bar, and the bar was returned to the oven. The third paper was removed from the bar at the end of the aging period. After each paper was removed, the paper was examined for oil bleed.

The removed paper from a given specimen was adhered (using double-sided tape) to a standard (approx. 22.9cm x 30.5cm (9 x 12 in.)) sheet of black paper. Each paper was scanned using a XEROX WORKCENTRE M118i copier/fax/scanner. All samples were scanned as quickly as possible, one after another, to minimize potential for scanner drift. A control sample was also scanned (a fresh sheet of cigarette paper).

The scanned image was then converted to an "8-bit grayscale image," so that a grayscale histogram could be created. The grayscale image was then analyzed, using Adobe PHOTOSHOP®CS2 (version 9.0.2) software, to create a histogram showing the percentage of pixels in each of four quadrants of grayscale (ranging from 0 (black - indicated oil) to 255 (white)), and a weighted grayscale value for the imaged area.

The derived grayscale value was used to calculate the Normalized Percent Shade Change according to the following equation:

$$\text{Normalized Percent Shade Change} = 100 \text{ x } (\% \text{ grey scale sample } - \% \text{ grey scale reference})/(100 - \% \text{ grey scale reference}).$$

In the above equation, the "% grey scale sample" refers to the percent grey scale measured on the aged sample, and the "% grey scale reference" refers the percent grey scale measured on an un-aged, untreated sheet of cigarette paper used as the reference.

*Gel Permeation Chromatography (GPC)*

Polymer molecular weight was characterized by high temperature, triple detector, Gel Permeation Chromatography (3D-GPC). The chromatographic system consisted of a Polymer Laboratories (Amherst, MA, now part of Varian, Inc, Shropshire, UK) "PL-GPC 210" high temperature chromatograph, equipped with a concentration detector (RI), a PRECISION DETECTORS (Amherst, MA) 2-angle laser light scattering detector, Model 2040, and a 4-capillary differential viscometer detector, Model 220, from VISCOTEK (Houston, TX). The 15° angle of the light scattering detector was used for calculation purposes.

Data collection was performed using VISCOTEK TriSEC software, version 3, and a 4-channel, VISCOTEK Data Manager DM400. The system was equipped with an on-line ERC-3415α four channel degasser system from ERC Inc (Tokyo, JP). The carousel compartment was operated at 150°C for polyethylene, and the column compartment was operated at 150°C. The columns were four Polymer Lab Mix-A 30 cm, 20 $\mu$m (micron) columns. The polymer solutions were prepared in 1,2,4-trichlorobenzene (TCB). The samples were prepared at a concentration of "0.1 grams of polymer" in "50 ml of TCB." The chromatographic solvent and the sample preparation solvent contained 200 ppm of butylated hydroxytoluene (BHT). Both solvent sources were nitrogen purged. The ethylene-based polymer samples were stirred gently at 160°C for four hours. The injection volume was 200 $\mu$l, and the flow rate was 1.0 ml/minute.

Calibration of the GPC column set was performed with 21 narrow molecular weight distribution polystyrene standards. The molecular weights of the standards ranged from 580 to 8,400,000, and were arranged in six "cocktail" mixtures, with at least a decade of separation between individual molecular weights. The polystyrene standard peak molecular weights were converted to polyethylene molecular weights using the following equation (as described in Williams and Ward, J. Polym. Sci., Polym. Let., 6, 621 (1968)):

$$M_{\text{polyethylene}} = A \text{ x } (M_{\text{polystyrene}})^B \quad (1A),$$

where M is the molecular weight, A has a value of 0.39 and B has a value of 1.0. A fourth order polynomial was used to fit the respective polyethylene-equivalent calibration points.

The total plate count of the GPC column set was performed with EICOSANE (prepared at 0.04 g in 50 milliliters of TCB, and dissolved for 20 minutes with gentle agitation. The plate count and symmetry were measured on a 200 microliter injection according to the following equations:

$$PlateCount = 5.54 * (RV\ at\ Peak\ Maximum\ /\ (Peak\ width\ at\ ½\ height))\ ^\wedge\ 2 \quad (2A),$$

where RV is the retention volume in milliliters, and the peak width is in milliliters.

$$Symmetry = (Rear\ peak\ width\ at\ one\ tenth\ height - RV\ at\ Peak\ maximum)\ /\ (RV\ at$$

$$Peak\ Maximum - Front\ peak\ width\ at\ one\ tenth\ height) \quad (3A),$$

where RV is the retention volume in milliliters, and the peak width is in milliliters.

The Systematic Approach for the determination of multi-detector offsets was done in a manner consistent with that published by Balke, Mourey, et. Al (Mourey and Balke, Chromatography Polym. Chpt. 12, (1992)) (Balke, Thitiratsakul, Lew, Cheung, Mourey, Chromatography Polym. Chpt. 13, (1992)). Optimizing dual detector, log molecular weight results, from a broad polyethylene of 115,000, to the narrow standard column calibration results, from the narrow standards calibration curve, using in-house software. The molecular weight data for off-set determination was obtained in a manner consistent with that published by Zimm (Zimm, B.H., J.Chem. Phys., 16, 1099 (1948)) and Kratochvil (Kratochvil, P., Classical Light Scattering from Polymer Solutions, Elsevier, Oxford, NY (1987)). The overall injected concentration, used for the determination of the molecular weight, was obtained from the sample refractive index, increment area, and the RI detector calibration from a linear polyethylene homopolymer of 115,000 Dalton molecular weight. The refractive index increment (dn/dc) for polyethylene is -0.104 mL/g. The chromatographic concentrations were assumed low enough to eliminate addressing 2nd Virial coefficient effects (concentration effects on molecular weight).

The calculations of Mn, Mw, and Mz based on GPC (conventional GPC for Mn, Mw and Mz) results, using the RI detector were determined from the following equations:

$$\overline{Mn} = \frac{\sum\limits^{i} RI_i}{\sum\limits^{i} \left( RI_i \middle/ M_{calibration_i} \right)} \quad (4A),$$

$$\overline{Mw} = \frac{\sum\limits^{i} \left( RI_i * Mcal_i \right)}{\sum\limits^{i} RI_i} \quad (5A),$$

$$\overline{Mz} = \frac{\sum\limits^{i} \left( RI_i * Mcal^2_i \right)}{\sum\limits^{i} \left( RI_i * Mcal_i \right)} \quad (6A).$$

Another form of molecular weight average is the viscosity average (average Mv) which can be calculated using Equation 7A:

$$\overline{Mz} = \left( \frac{\sum\limits^{i} \left( RI_i * Mcal_i^{\alpha+1} \right)}{\sum\limits^{i} \left( RI_i \right)} \right)^{1/\alpha} \quad (7A),$$

where $\alpha$ is a material dependent parameter which relates the intrinsic viscosity ($[\eta]$) to the molecular weight of the polymer.

In addition to the above calculations, a set of alternative values [Mw(abs), Mz(abs), Mz (BB) and Mz+1 (BB)] values were also calculated with the method proposed by Yau and Gillespie, Polymer, 42, 8947-8958 (2001), and determined from the following equations:

$$\overline{Mw}(abs) = K_{LS} * \frac{\sum^{i} (LS_i)}{\sum^{i} (IR_i)} \quad (8A),$$

where, KLS = LS - MW calibration constant,

$$\overline{Mz}(abs) = \frac{\sum^{i} RI_i * (LS_i / RI_i)^2}{\sum^{i} RI_i * (LS_i / RI_i)} \quad (9A),$$

$$\overline{Mz}(BB) = \frac{\sum^{i} (LS_i * Mcalibration_i)}{\sum^{i} (LS_i)} \quad (10A),$$

$$\overline{M_{z+1}}(BB) = \frac{\sum^{i} (LS_i * Mcalibration_i^2)}{\sum^{i} (LS_i * Mcalibration_i)} \quad (11A),$$

where $LS_i$ is the 15 degree LS signal, and the Mcalibration uses equation 1A, and the LS detector alignment is as described previously.

*Durometer Hardness*

*Durometer A (or* Shore A) hardness was measured on molded plaques per ASTM D2240-00. This test method permits hardness measurements based on either initial indentation or indentation after a specified period of time, or both. In this case a specified time period of "5 seconds" was used. An average of five measurements were recorded.

*Gloss*

Gloss was measured on molded plaques according to ASTM D523, using a BYK GARDNER MICRO-TRI-gloss meter at a 60 degree angle. An average of four readings or more were recorded.

*Compression Set*

Compression set was measured according to ASTM D 395-01. The diameter of the round testing discs was 29 mm, and the total thickness of the disc stack was 12.9 mm. The sample's thickness was squeezed 25% between two steel plates, and the sample was placed in a 70°C oven. After 22 hours of thermal treatment, the sample was removed from the oven, and the compression set was taken as the percentage of the original deflection after the material is allowed to recover at standard conditions for 30 minutes. The % compression set was calculated using the following equation:

$$C_B = [(t_o - t_i) / (t_o - t_n)] * 100,$$

where $t_o$ is the original specimen thickness, $t_i$ is the specimen thickness after testing, and $t_n$ is the spacer thickness. Results are reported from an average of 3 values. In cases of limited samples, an average of 2 values was recorded.

*Tensile Properties ASTM 638-03*

The tensile properties of the formulated samples were measured by using ASTM D638-03 standard test. Samples were "die cut," compression molded samples. The samples were tested using an INSTRU-MET/SINTECH Computer Controlled Tester. At least three samples were tested for each formulation at ambient conditions. Samples were strained to failure at a rate of 12.7cm (5-inch)/min. From each stress-strain curve, the Strain at Break, the Ultimate Stress (Stress at Break), and the Tensile Toughness were determined.

*Melt Strength*

A charge of sample was loaded into a GÖTTFERT RHEO-TESTER 2000 at 190°C, and extruded with a piston, with a diameter of 12 mm, at a piston speed of 0.265 mm/sec, and a shear rate of 38.2 1/s. The resulting strand was drawn through rotating take up wheels, which were then accelerated at a rate of 2.4 mm/sec/sec, until a steady state reading (in cN, from a calibrated transducer) was achieved, prior to strand break. The reported melt strength, in cN, was the average melt strength from all the recorded values for the steady state, until strand break.

*Tear Strength*

The tear strength was measured according to ASTM D624. The samples were compression molded or injection molded, and cut using the ASTM die C. Each sample was loaded to an INSTRON machine. The grip separation was 5.08cm (two inches), and the testing speed was 50.8cm (20 in)/min. A minimum of three samples were tested for each formulation.

EXPERIMENTAL

The following polymers were studied, as shown in Table 1 below. Each polymer was blended with one or more stabilizers, present in low (ppm) amounts, and is available from The Dow Chemical Company.

Table 1: Polymers

| Polymer* | Type | Density (g/cc) | MI** or MFR** | Tm (°C) |
|---|---|---|---|---|
| EAO 387 | EthyleneButene-1 Copolymer | 0.870 | < 0.5 (MI) | 51 |
| EAO 487 | Ethylene/Butene-1 Copolymer | 0.860 | < 0.5 (MI) | 37 |
| EAO100 | Ethylene/Octene-1 Copolvmer | 0.870 | 1.0 (MI) | 60 |
| EAO180 | Ethylene/Octene-1 Copolymer | 0.863 | 0.5 (MI) | 47 |
| EAO386 | Ethylene/Propylene Copolymer | 0.875 | < 0.5 (MI) | 55 |
| EPDM 745 | Ethylene/Propylene/ENB Terpolymer | 0.864 | < 0.5 (MI) | |
| EPDM 722 | Ethylene/Propylene/ENB Terpolymer | 0.867 | < 0.5 (MI) | |
| OBC 07 | Ethylene/Octene-1 Multiblock Copolymer | 0.866 | 0.5 (MI) | 119 |
| LDPE 2I | LDPE | 0.919 | 0.47 (MI) | 108 |
| LDPE 3I | LDPE | 0.923 | 25 (MI) | 110 |
| LDPE 5I | LDPE | 0.925 | 1.9 (MI) | 114 |
| LDPE 0I | LDPE | 0.922 | 2 (MI) | 112 |
| LDPE 05 | LDPE | 0.918 | 5.5 (MI) | 108 |
| LDPE 94 | LDPE | 0.922 | 0.8 | 112 |

(continued)

| Polymer* | Type | Density (g/cc) | MI** or MFR** | Tm (°C) |
|---|---|---|---|---|
| HDPE 92 | HDPE | 0.949 | 0.06 (MI) | |
| PP 14 | Polypropylene Homopolymer | 0.900 | 0.5 (MFR) | 164 |
| PP 02 | Polypropylene Homopolymer | 0.90 | 2.0 (MFR) | 161 |
| * EAO polymers are homogeneously branched substantially linear copolymers. **MI is measured at 190°C, 2.16 kg and MFR is measured at 230°C, 2.16 kg. HYDROBRITE 550 is a white mineral oil with about 70 wt% paraffinic and 30 wt% naphthenic content, and a density of 0.870 g/cc (available from Sonneborn Inc.). | | | | |

PARALUX 6001 is a process oil with about 70 wt% paraffinic and 30 wt% naphthenic content, and a density of 0.872 g/cc (available from Chevron Phillips Chemical Company LLC.).

DAPLOY WB 130HMS is a high melt strength grade of polypropylene from Borealis.

MB50-002 is a siloxane masterbatch containing 50% of an ultra-high molecular weight siloxane polymer dispersed in polyethylene (LDPE) homopolymer (available from Dow Corning Corporation.)

Molecular weight data for the LDPE polymers in Table 1 are shown below in Table 2. An Mz(abs)/Mz(conv) ratio of 2.2 or higher indicates a highly branched polymer.

Table 2: GPC Molecular Weight (g/mole) Data of Low Density Polyethylenes

| | Mn (conv) | Mw (conv) | Mz (conv) | Mw/Mn (conv) | Mn (abs) | Mw (abs) | Mz(BB) | Mz(abs) | Mz(abs)/Mz(conv) |
|---|---|---|---|---|---|---|---|---|---|
| LDPE 94 | 10120 | 89960 | 388200 | 8.89 | 5358 | 135310 | 177100 | 984900 | 2.54 |
| LDPE 5I | 3380 | 79600 | 321500 | 23.5 | 1251 | 127330 | 167800 | 1006000 | 3.13 |
| LDPE 5I | 10190 | 79280 | 250900 | 7.78 | 7001 | 126100 | 144200 | 732100 | 2.92 |
| LDPE 05 | 3620 | 154480 | 757100 | 42.7 | 1339 | 416570 | 271500 | 3536600 | 4.67 |
| LDPE 3I | 4200 | 81700 | 510000 | 19.4 | 2260 | 220820 | 163000 | 6084900 | 11.9 |
| LDPE 2I | 19970 | 236960 | 865900 | 11.9 | 13,606 | 610520 | 628600 | 3095700 | 3.6 |

Formulations and Properties

Inventive and comparative formulations containing 20 weight percent oil are shown in Table 3.

Table 3: Inventive Formulations (IE) and Comparative Formulations (CE) Containing 20% by Weight Mineral Oil

|  | 22-2 (CE) | 22-4 (CE) | 22-5 (IE) | 22-6 (CE) |
|---|---|---|---|---|
| EAO 386 | 14.4 |  |  |  |
| EAO 387 |  |  |  | 28.7 |
| EAO 100 | 28.7 | 28.7 | 28.7 |  |
| EPDM 722 |  | 14.4 |  | 14.4 |
| LDPE 2I |  |  | 14.4 |  |
| DAPLOY Wb130HMS | 14.4 | 14.4 | 14.4 | 14.4 |
| CaCO3 | 20 | 20 | 20 | 20 |
| PARALUX 6001R oil | 20 | 20 | 20 | 20 |
| MB50-002 | 0.5 | 0.5 | 0.5 | 0.5 |
| TiO2 | 2 | 2 | 2 | 2 |
| Total Wt | 100.0 | 100.0 | 100.0 | 100.0 |

The formulations in Table 3 were compounded using a WP ZSK-25 Twin Screw Extruder. The extruder conditions are shown below in Table 4. The resin pellets were dryblended first, and then fed using a "loss-in-weight" feeder. The oil was fed via oil-injection ports, using a gear pump. The extruded formulation was pelletized with an underwater pelletizer.

Table 4: Extruder Conditions

|  | Setting/Range |
|---|---|
| Zone #1 Temp (C) | 137-142 |
| Zone #2 Temp (C) | 190-192 |
| Zone #3 Temp (C) | 190 |
| Zone #4 Temp (C) | 197-210 |
| Zone #5 Temp (C) | 190-192 |
| Zone #6 Temp (C) | 189-191 |
| Zone #7 Temp (C) | 189-191 |
| Die Temp (C) | 179-181 |
| Melt Temp (C) | 198-209 |
| Extruder RPM's | 505-507 |
| Extruder Torque % | 44-55 |
| Output (#/hr) | 50 |

Each formulation (pellets) was injection molded into a plaque (10.2cm x 15.2cm x 0.32cm (4 in x 6 in x 0.125 in)). The injection molding (IM) conditions are shown below in Table 5.

Table 5: Injection Molding Conditions

|  | Setting/Range |
|---|---|
| Zone 1 Temp (°C((°F)) | 121-204 (250-400) |
| Zone 2 Temp (°C((°F)) | 177-204 (350-400) |

(continued)

| | Setting/Range |
|---|---|
| Zone 3 Temp (°C((°F)) | 204 (400) |
| Zone 4 Temp (°C((°F)) | 204 (400) |
| Nozzle Temp (°C((°F)) | 204 (400) |
| Mold Temperature (°C((°F)) | 18 (65) |
| Extruder RPM (m/min) | 20-30 |
| Backpressure (MPa) ((Bar)) | 1.5(15) |
| Dosage (ccm) | 70 |
| Injection Speed #1 (ccm/s) | 25 |
| Pressure at transfer (MPa) ((Bar)) | 37-51 (370-510) |
| Fill Time (s) | 2.1-2.4 |
| Pressure #1 (MPa) ((Bar)) | 37-50 (370-500) |
| Hold Time #1 (s) | 30 |
| Cool Time (s) | 20 |
| Dosage Time (s) | 6.7-13 |
| Cycle Time (s) | 59-60 |

Gloss was measured on the formulations (injection molded plaques) listed in Table 3. The results are shown in Table 6, and depicted in Figure 2.

Table 6: Gloss (%) of Injection Molded Plaques (Ave. (SD))

| | 22-2 (CE) | 22-4 (CE) | 22-5 (IE) | 22-6 (CE) |
|---|---|---|---|---|
| 2 days | 29.1 (5.6) | 36.1 (6.2) | 11.8 (1.1) | 21.6 (5.8) |
| 168 days | 37.3 (2.1) | 43.2 (5.0) | 12.7 (3.0) | 24.7 (6.3) |
| 357 days | 41.8 (7.4) | 51.8 (5.9) | 13.5 (1.2) | 23.3 (4.1) |

As shown in Table 6, Inventive Example of 22-5 unexpectedly exhibited the lowest surface gloss, and this low gloss remained fairly stable over time.

Oil exudation ratings of the formulations listed in Table 3 are shown in Table 7 below. The results were obtained using the "plastic bag" test method as described above.

Table 7: Visual Ratings of Surface Oil Exudation

| | 22-2 (CE) | 22-4 (CE) | 22-5 (IE) | 22-6 (CE) |
|---|---|---|---|---|
| 121 Day | 5 | 4 | 1 | 3 |
| 161 Day | 9 | 9 | 0 | 6 |
| 254 Day | 9 | 9 | 0 | 6 |
| 357 Day | 9 | 10 | 0 | 6 |

As shown in Table 8, Inventive Example 22-5 unexpectedly exhibited the best (lowest) level of oil exudation, compared to the comparative examples. Even after 357 days, no sign of oil-related wetting at the interface of the contacting plastic bag was observed in the inventive example. Some mechanical properties are shown in Table 8.

Table 8: Mechanical Properties and Melt Strength Data (Ave, (SD))

| | | 22-2 (CE) | 22-4 (CE) | 22-5 (IE) | 22-6 (CE) |
|---|---|---|---|---|---|
| Shore A Hardness | | 78.9 (1.24) | 75.7 (1.10) | 85.3 (0.60) | 75.2 (1.62) |
| Tear Strength | N/m (lbf/in) | 42,906 (543) (245 (3.1)) | 39,754 (841) (227 (4.8)) | 50,262 (403) (287 (2.3)) | 40,454 (473) (231 (2.7)) |
| Strain @ Break | % | 401 (28.8) | 459 (21.5) | 321 (62.8) | 384 (40.8) |
| Stress @ Break | MPa (psi) | 6.1 (0.18) (872 (25.1)) | 5.8 (0.13) (830 (18.8)) | 7.6 (0.3) (1087 (36.5)) | 6.0 (0.2) (853 (28.7)) |
| Toughness | N.m (in*lbf) | 10.5 (0.92) (92.7 (8.1)) | 11.4 (0.78) (100.5 (6.9)) | 10.3 (1.85) (91.3 (16.4)) | 9.92 (1.43) (87.8 (12.7)) |
| Melt Strength | cN | 3.13 (0.14) | 2.85 (0.09) | 6.94 (0.19) | 5.04 (0.17) |

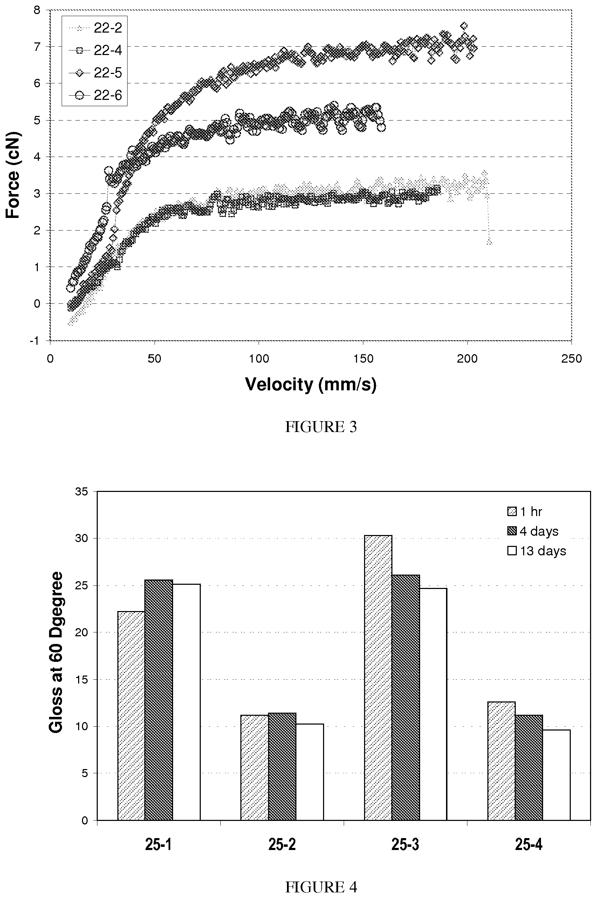

At comparable compositions, Inventive Example 22-5 exhibited higher tear strength and higher tensile strength. The Inventive Example 22-5 also exhibited higher melt strength (see Figure 3), which is desirable to retain dimensional stability without, or with minimal, sagging during over-molding and/or profile extrusion processes.

Additional formulations containing 25 weight percent oil are shown below in Table 9. The formulations in Table 9 were compounded using a WP ZSK-25 Twin Screw Extruder, and injection molded into plaques. Similar compounding and injection molding conditions were employed, as shown in Tables 4 and 5.

Table 9: Inventive (IE) and Comparative (CE) Formulations Containing 25% by Oil

| Example | 25-1 (CE) | 25-2 (IE) | 25-3 (CE) | 25-4 (IE) | 25-6 (IE) | 25-7 (IE) |
|---|---|---|---|---|---|---|
| HDPE 92 | 17.50 | 17.50 | 17.50 | 17.50 | 17.50 | 11.67 |
| PP 14 | | | | | | 7.29 |
| OBC 07* | 35.00 | 27.71 | | | | |
| EAO 180* | | | 35.00 | 27.71 | | 26.25 |
| EAO 487* | | | | | 27.71 | |
| LDPE 2I | | 7.29 | | 7.29 | 7.29 | 7.29 |
| PARALUX 6001R oil | 25 | 25 | 25 | 25 | 25 | 25 |
| CaCO3 | 20 | 20 | 20 | 20 | 20 | 20 |
| MB50-002 | 0.5 | 0.5 | 0.5 | 0.5 | 0.5 | 0.5 |
| TiO2 | 2 | 2 | 2 | 2 | 2 | 2 |
| Total Wt | 100 | 100 | 100 | 100 | 100 | 100 |
| *Elastomer | | | | | | |

Gloss values of injection molded plaques of the inventive and comparative examples of Table 9 were measured and tabulated in Table 10 below.

Table 10: Gloss (%) of Injection Molded Plaques (Ave. (SD))

| Gloss (%) | 25-1 (CE) | 25-2 (IE) | 25-3 (CE) | 25-4 (IE) | 25-6 (IE) | 25-7 (IE) |
|---|---|---|---|---|---|---|
| 1 hr | 22.2 (4.0) | 11.2 (4.4) | 30.3 (4.2) | 12.6 (2.8) | 5.8 (0.5) | 12.1 (4.6) |
| 6 days | 25.6 (3.4) | 11.4 (4.6) | 26.1 (2.2) | 11.2 (1.3) | 6.2 (0.9) | 12.9 (8.3) |
| 13 days | 25.2 (4.7) | 10.3 (2.8) | 24.7 (2.7) | 9.6 (2.1) | 5.7 (0.3) | 9.0 (2.0) |
| 27 days | 25.7 (5.0) | 12.3 (5.6) | 27.0 (7.5) | 13.0(4.1) | 5.9 (0.4) | 10.4 (2.1) |

As compared with CE 25-1 at similar composition, IE 25-2 showed lower measured surface gloss, which is desirable for many applications. Similarly, IE 25-4 (vs. CE 25-3) showed lower measured surface gloss. These results are shown in Figure 4.

Oil exudation ratings of the formulations listed in Table 9 are shown in Table 11 below. The results were obtained using the "plastic bag" test method as described above.

Table 11: Visual Rating of Surface Oil Exudation

| Rank After | 25-1 (CE) | 25-2 (IE) | 25-3 (CE) | 25-4 (IE) | 25-6 (IE) | 25-7 (IE) |
|---|---|---|---|---|---|---|
| 3 weeks | 0 | 0 | 0 | 0 | 0 | 0 |
| 7 weeks | 2 | 1 | 3 | 0 | 0 | 0 |

Compared with Comparative Example 25-1, Inventive Example 25-2, with a lower elastomer/oil weight ratio, unexpectedly exhibited low gloss and reduced oil exudation. Similarly, compared with Comparative Example 25-3, Inventive Example 25-4, with a lower elastomer/oil weight ratio, unexpectedly exhibited low gloss and reduced oil exudation. Inventive Examples of 25-6 and 25-7 exhibited low gloss for extended time, and no sign of oil exudation after seven weeks. Some mechanical properties are shown in Table 12.

Table 12: Mechanical Properties (Ave. (SD))

| | | 25-1 (CE) | 25-2 (IE) | 25-3 (CE) | 25-4 (IE) | 25-6 (IE) | 25-7 (IE) |
|---|---|---|---|---|---|---|---|
| Shore A Hardness | | 71.2 (0.13) | 76.1 (0.41) | 72.8 (0.55) | 80.1 (0.31) | 78.4 (0.40) | 76.8 (0.43) |
| Tear Strength | N/m (lbf/in) | 33,975 (280) (194 (1.6)) | 44,657 (771) (255 (4.4)) | 38,528 (525) (220 (3.0)) | 47,459 (823) (271 (4.7)) | 49,736 (771) (284 (4.4)) | 44,307 (631) (253 (3.6)) |
| Strain @ Break | % | 587 (26.8) | 493 (27.1) | 586 (25.2) | 519 (16.9) | 511 (72.1) | 529 (30.2) |
| Stress @ Break | MPa (psi) | 4.6 (0.25) (661 (35.8)) | 6.0 (0.2) (851 (29.1)) | 5.04 (0.26) (720 (36.6)) | 5.9 (0.37) (836 (52.5)) | 5.95 (0.20) (850 (28.9)) | 6.02 (0.18) (860 (26.1)) |
| Toughness | N.m (in*lbf) | 11.4 (0.57) (101 (5.0)) | 12.9 (1.06) (114 (9.4)) | 12.5 (1.06) (111 (9.4)) | 13.7 (0.85) (121 (7.5)) | 14.6 (2.7) (129 (23.6)) | 14.0 (1.14) (124 (10.1)) |

At comparable compositions, Inventive Examples 25-2 (vs. 25-1) and 25-4 (vs. 25- 3) exhibited higher tear strength, higher tensile strength, and higher tensile toughness.

Additional formulations containing 30-60 weight percent oil are shown below in Table 13. The formulations in Table 13 were compounded using a WP ZSK-25 Twin Screw Extruder, and injection molded into plaques. Similar compounding and injection molding conditions were employed as shown in Tables 4 and 5.

Table 13: Inventive (IE) and Comparative (CE) Formulations Containing 30-60 wt% Oil

| | 6 (CE) | 6A (CE) | 6B (CE) | 6C (CE) | 7 (IE) |
|---|---|---|---|---|---|
| OBC 07 | 100 | 70 | 50 | 40 | 30 |
| Mineral oil* | 0 | 30 | 50 | 60 | 60 |
| LDPE 2I | | | | | 10 |
| *Mineral oil for the comparative examples was PARALUX 6001R. The mineral oil for Inventive Example 7 was HYDROBRITE 550. | | | | | |

Shore A Hardness data and compression set data of oil-extended formulations of Table 13 are shown in Table 14.

Table 14: Shore A Hardness and Compression Set* (Ave. (SD))

|  | 6 (CE) | 6A (CE) | 6B (CE) | 6C (CE) | 7 (IE) |
|---|---|---|---|---|---|
| Shore A Hardness | 64 (0.2) | 39 (0.2) | 19 (0.1) | 9 (0.1) | 24 (0.3) |
| Compression Set @ 70°C (%) | 53 (5.8) | 62 (0.1) | 73 (50) | 61 (0.8) | 44 (0.8) |
| *Each Compression Set Value in Table 14 was average of two readings. | | | | | |

Mineral oil is often added to polymeric compositions to modify the hardness, to provide a soft-touch feel, and to alter the processing characteristics or cost of the compositions for targeted applications. It is generally desired to have polymer compositions which have a low compression set at a comparable hardness, specified for a targeted application. The Inventive Example 7 unexpectedly exhibited significantly lower compression set values (conditioned at 70°C for 22 hrs) as compared to the comparative examples.

Additional formulations containing 30-60 weight percent oil are shown in Table 15. Polymer formulations were prepared in a HAAKE RHEOMFX 3000E mixer, at 190°C, with roller style blades, at 40-60 rpm rotor speed. The mixing bowl was charged with polymer and other components. The oil was slowly added to the molten polymer formulation to avoid slippage. Once polymer and all components were loaded, and good kneading was established, the mixing was continued for five additional minutes. The rotors were then stopped, the mixer disassembled, and the final polymer formulation was collected on MYLAR sheets, cold pressed into a "pancake" shape for further molding later, and cooled to room temperature.

The formulations were compression molded on a CARVER press, with a thickness of about 0.32cm (1/8 inch). The above mixed formulation was sandwiched between two sheets of MYLAR or TEFLON, which were placed between two metal plates resting on a tray holder. Samples were molded at 190°C, for four minutes, at 280 MPa (40,000 psi). Sheet samples were removed, and placed between cold platens (cooled by circulating tap water) for four minutes, at 280 MPa (40,000 psi).

Table 15: Inventive (IE) and Comparative (CE) Formulations Containing 30-60 wt% Oil

|  | 26-2 (CE) | 26-3 (CE) | 26-5 (CE) | 26-7 (CE) | 26-8 (IE) |
|---|---|---|---|---|---|
| OBC 07 (wt%) | 70 | 35.0 | 41.3 | 70 | 35.0 |
| EAO 487 (wt%) |  | 35.0 | 13.7 |  |  |
| LDPE 2I (wt%) |  |  |  |  | 35.0 |
| HYDROBRITE 550 | 30 | 30 | 45.0 | 30 | 30 |
| Total Wt | 100 | 100 | 100 | 100 | 100 |

The surface oil exudations of the above formulations were measured, after specified times, by shade changes (%) using cigarette paper. The results are shown in below.

Table 16: Surface Oil Exudation - Percent Shade Changes

|  | 26-2 (CE) | 26-3 (CE) | 26-5 (CE) | 26-7 (CE) | 26-8 (IE) |
|---|---|---|---|---|---|
| 23°C, 24 hr | 13.8 | 5.6 | 0.2 | 0.7 | 0.8 |
| 60°C, 24 hr | 13.1 | 19.0 | 18.5 | 1.4 | 4.8 |
| 23°C, 1 week | 4.9 | 0.0 | 0.0 | 0.0 | 2.9 |
| 60°C, 1 week | 7.3 | 34.7 | 73.3 | 7.6 | 0.0 |
| Oil/Elastomer(s)* weight ratio | 0.43 | 0.43 | 0.82 | 0.43 | 0.86 |

*Elastomer(s) = amount of OBC + amount of EAO

Compared with Comparative Examples 26-2 (and 26-7), Inventive Example 26-8, with a significantly higher oil/elastomer weight ratio, showed a lower degree of oil exudation, as indicated by lower increase in the "percentage shade change" of each oil-absorbing cigarette paper.

A very high oil levels, for example an "oil to elastomer" ratio of three or higher, an excessive amount of oil bleed occurs, even in formulations containing LDPE, since such formulations contains an overwhelmingly high oil level.

**Claims**

1. A composition comprising at least the following:

   A) an ethylene-based polymer having at least the following characteristics: (i) a melting temperature of greater than, or equal to, 100°C, as determined by DSC, (ii) a molecular weight ratio, Mz(abs)/Mz(conv) greater than 2.2 as determined by GPC and (iii) a molecular weight distribution (Mw(conv)/Mn(conv)) of greater than, or equal to 7 as determined by GPC; and
   B) an oil.

2. The composition of Claim 1, wherein the ethylene-based polymer has a percent crystallinity greater than 28%, as determined by DSC.

3. The composition of any of the previous claims, wherein the ethylene-based polymer has a number average molecular weight (Mn(conv)) greater than 2800 g/mole as determined by GPC.

4. The composition of any of the previous claims, wherein the ethylene-based polymer, Component A, has a MR value less than 200 g/10 min, where MR = I2xRR where M is the melt index in g/10 min as measured in accordance with ASTM D-1238-04, condition 190°C/2.16 kg and R is the rheology ratio (RR) or V0-1/V100, where V0.1 is the melt viscosity of polymer at 190°C, measured at a shear rate of 0.1 rad/sec, and V100 is the melt viscosity of polymer at 190°C, measured at a shear rate of 100 rad/sec, wherein melt viscosities are measured under a nitrogen atmosphere, using a dynamic mechanical spectrometer, under a dynamic sweep made from 0.1 to 100 rad/sec.

5. The composition of any of the previous claims, wherein the ethylene-based polymer, Component A, has a molecular weight ratio (Mz(abs)/Mz(conv)) greater than, or equal to, 2.5, preferably greater than, or equal to, 2.9 as determined by GPC.

6. The composition of any of the previous claims, wherein the ethylene-based polymer, Component A, is a low density polyethylene (LDPE).

7. The composition of any of the previous claims, wherein the ethylene-based polymer, Component A, has a density from 0.900 to 0.940 g/cc as measured in accordance with ASTM D-792-08.

8. The composition of any of the previous claims, wherein the ethylene-based polymer, Component A, has melt index (I2) from 0.2 to 50 g/10 min as measured in accordance with ASTM D-1238-04, condition 190°C/2.16 kg.

9. The composition of any of the previous claims, wherein the ethylene-based polymer, Component A, is present in an amount from 2 to 50 weight percent, based on the weight of the composition.

10. The composition of any of the previous claims, wherein the oil is present in an amount from 10 to 70 weight percent, based on the weight of the composition.

11. The composition of any of the previous claims, wherein the oil is present in an amount from 35 to 90 weight percent, based on the sum weight of the ethylene-based polymer and the oil.

12. The composition of any of the previous claims, further comprising an olefin-based polymer selected from the group consisting of an ethylene-based polymer and a propylene-based polymer wherein the ethylene-based polymer has a molecular weight distribution (Mw(conv)/Mn(conv)) from 1.1 to 5 as determined by GPC.

13. The composition of Claim 12, wherein the olefin-based polymer is a second ethylene-based polymer.

**Patentansprüche**

1.  Eine Zusammensetzung, die mindestens das Folgende beinhaltet:

    A) ein Polymer auf Ethylenbasis, das mindestens die folgenden Eigenschaften aufweist: (i) eine Schmelztemperatur von mehr als oder gleich 100 °C, wie bestimmt durch DSK, (ii) ein Molekulargewichtsverhältnis Mz(abs)/Mz(conv) von mehr als 2,2, wie bestimmt durch GPC und (iii) eine Molekulargewichtsverteilung (Mw(conv)/Mn(conv)) von mehr als oder gleich 7, wie bestimmt durch GPC; und
    B) ein Öl.

2.  Zusammensetzung gemäß Anspruch 1, wobei das Polymer auf Ethylenbasis eine Prozentkristallinität von mehr als 28 % aufweist, wie durch DSK bestimmt.

3.  Zusammensetzung gemäß einem der vorhergehenden Ansprüche, wobei das Polymer auf Ethylenbasis ein zahlengemitteltes Molekulargewicht (Mn(conv)) von mehr als 2800 g/Mol aufweist, wie bestimmt durch GPC.

4.  Zusammensetzung gemäß einem der vorhergehenden Ansprüche, wobei das Polymer auf Ethylenbasis, Komponente A, einen MR-Wert von weniger als 200 g/10 min aufweist, wobei MR = I2xRR, wobei M der Schmelzindex in g/10 min, wie gemessen gemäß ASTM D-1238-04, Bedingung 190 °C/2,16 kg, ist, und R das Rheologieverhältnis (RR) oder V0-1/V100 ist, wobei V0.1 die Schmelzviskosität von Polymer bei 190 °C ist, gemessen bei einer Schergeschwindigkeit von 0,1 rad/sec, und V100 die Schmelzviskosität von Polymer bei 190 °C ist, gemessen bei einer Schergeschwindigkeit von 100 rad/sec, wobei die Schmelzviskositäten unter einer Stickstoffatmosphäre unter Verwendung eines dynamischen mechanischen Spektrometers unter einem dynamischen Durchlauf von 0,1 bis 100 rad/sec gemessen werden.

5.  Zusammensetzung gemäß einem der vorhergehenden Ansprüche, wobei das Polymer auf Ethylenbasis, Komponente A, ein Molekulargewichtsverhältnis (Mz(abs)/Mz(conv)) von mehr als oder gleich 2,5, vorzugsweise mehr als oder gleich 2,9 aufweist, wie bestimmt durch GPC.

6.  Zusammensetzung gemäß einem der vorhergehenden Ansprüche, wobei das Polymer auf Ethylenbasis, Komponente A, ein Polyethylen niederer Dichte (LDPE) ist.

7.  Zusammensetzung gemäß einem der vorhergehenden Ansprüche, wobei das Polymer auf Ethylenbasis, Komponente A, eine Dichte von 0,900 bis 0,940 g/cm$^3$, wie gemessen gemäß ASTM D-792-08, aufweist.

8.  Zusammensetzung gemäß einem der vorhergehenden Ansprüche, wobei das Polymer auf Ethylenbasis, Komponente A, einen Schmelzindex (I2) von 0,2 bis 50 g/10 min, wie gemessen gemäß ASTM D-1238-04, Bedingung 190 °C/2,16 kg, aufweist.

9.  Zusammensetzung gemäß einem der vorhergehenden Ansprüche, wobei das Polymer auf Ethylenbasis, Komponente A, bezogen auf das Gewicht der Zusammensetzung in einer Menge von 2 bis 50 Gewichtsprozent vorhanden ist.

10. Zusammensetzung gemäß einem der vorhergehenden Ansprüche, wobei das Öl, bezogen auf das Gewicht der Zusammensetzung, in einer Menge von 10 bis 70 Gewichtsprozent vorhanden ist.

11. Zusammensetzung gemäß einem der vorhergehenden Ansprüche, wobei das Öl, bezogen auf das Summengewicht des Polymers auf Ethylenbasis und des Öls, in einer Menge von 35 bis 90 Gewichtsprozent vorhanden ist.

12. Zusammensetzung gemäß einem der vorhergehenden Ansprüche, die ferner ein Polymer auf Olefinbasis, ausgewählt aus der Gruppe, bestehend aus einem Polymer auf Ethylenbasis und einem Polymer auf Propylenbasis, beinhaltet, wobei das Polymer auf Ethylenbasis eine Molekulargewichtsverteilung (Mw(conv)/Mn(conv)) von 1,1 bis 5, wie bestimmt durch GPC, aufweist.

13. Zusammensetzung gemäß Anspruch 12, wobei das Polymer auf Olefinbasis ein zweites Polymer auf Ethylenbasis ist.

**Revendications**

1. Une composition comprenant au moins ce qui suit :

   A) un polymère à base d'éthylène ayant au moins les caractéristiques suivantes : (i) une température de fusion supérieure ou égale à 100 °C, telle que déterminée par DSC, (ii) un rapport de masse moléculaire, Mz(abs)/Mz(conv) supérieur à 2,2 tel que déterminé par CPG et (iii) une distribution de masses moléculaires (Mw(conv)/Mn(conv)) supérieure ou égale à 7 telle que déterminée par CPG ; et
   B) une huile.

2. La composition de la revendication 1, dans laquelle le polymère à base d'éthylène a un pourcentage de cristallinité supérieur à 28 %, tel que déterminé par DSC.

3. La composition de n'importe lesquelles des revendications précédentes, dans laquelle le polymère à base d'éthylène a une masse moléculaire moyenne en nombre (Mn(conv)) supérieure à 2 800 g/mole telle que déterminée par CPG.

4. La composition de n'importe lesquelles des revendications précédentes, dans laquelle le polymère à base d'éthylène, Constituant A, a une valeur MR inférieure à 200 g/10 min, où MR = I2xRR où M est l'indice de fluidité à l'état fondu en g/10 min tel que mesuré conformément à l'ASTM D-1238-04, condition 190 °C/2,16 kg et R est le rapport rhéologique (RR) ou V0-1/V100, où V0,1 est la viscosité à l'état fondu de polymère à 190 °C, mesurée à un taux de cisaillement de 0,1 rad/sec et V100 est la viscosité à l'état fondu de polymère à 190 °C, mesurée à un taux de cisaillement de 100 rad/sec, dans laquelle les viscosités à l'état fondu sont mesurées sous atmosphère azotée, en utilisant un spectromètre mécanique dynamique, sous un balayage dynamique réalisé de 0,1 à 100 rad/sec.

5. La composition de n'importe lesquelles des revendications précédentes, dans laquelle le polymère à base d'éthylène, Constituant A, a un rapport de masse moléculaire (Mz(abs)/Mz(conv)) supérieur ou égal à 2,5, de préférence supérieur ou égal à 2,9 tel que déterminé par CPG.

6. La composition de n'importe lesquelles des revendications précédentes, dans laquelle le polymère à base d'éthylène, Constituant A, est un polyéthylène basse densité (PEBD).

7. La composition de n'importe lesquelles des revendications précédentes, dans laquelle le polymère à base d'éthylène, Constituant A, a une masse volumique allant de 0,900 à 0,940 g/cm$^3$ telle que mesurée conformément à l'ASTM D-792-08.

8. La composition de n'importe lesquelles des revendications précédentes, dans laquelle le polymère à base d'éthylène, Constituant A, a un indice de fluidité à l'état fondu (I2) allant de 0,2 à 50 g/10 min tel que mesuré conformément à l'ASTM D-1238-04, condition 190 °C/2,16 kg.

9. La composition de n'importe lesquelles des revendications précédentes, dans laquelle le polymère à base d'éthylène, Constituant A, est présent en une quantité allant de 2 à 50 pour cent en poids, rapporté au poids de la composition.

10. La composition de n'importe lesquelles des revendications précédentes, dans laquelle l'huile est présente en une quantité allant de 10 à 70 pour cent en poids, rapporté au poids de la composition.

11. La composition de n'importe lesquelles des revendications précédentes, dans laquelle l'huile est présente en une quantité allant de 35 à 90 pour cent en poids, rapporté au poids de la somme du polymère à base d'éthylène et de l'huile.

12. La composition de n'importe lesquelles des revendications précédentes, comprenant en outre un polymère à base d'oléfine sélectionné dans le groupe constitué d'un polymère à base d'éthylène et d'un polymère à base de propylène, le polymère à base d'éthylène ayant une distribution de masses moléculaires (Mw(conv)/Mn(conv)) allant de 1,1 à 5 telle que déterminée par CPG.

13. La composition de la revendication 12, dans laquelle le polymère à base d'oléfine est un deuxième polymère à base d'éthylène.

FIGURE 1

FIGURE 2

FIGURE 3

FIGURE 4

# EP 2 576 688 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5505773 A
- US 5741843 A
- WO 2009114661 A
- WO 9910415 A
- US 5082348 A
- US 7101247 B
- US 6905431 B
- US 5994450 A
- US 6026527 A
- US 6835015 B
- US 6413458 B
- US 20030236313 A
- US 20040048018 A
- US 3645992 A
- EP 0129368 A
- EP 0260999 A
- US 4701432 A
- US 4937301 A
- US 4935397 A
- US 5055438 A
- WO 9007526 A
- US 5272236 A
- US 5278272 A
- US 6054544 A
- US 6335410 B
- US 6723810 B
- US 4076698 A, Anderson
- US 6680361 B
- WO 0026268 A
- US 7608668 B
- WO 2005090427 A
- US 20060199931 A
- US 20060199914 A
- US 20060199912 A
- US 7671106 B
- US 7579408 B
- US 20060199908 A
- US 7355089 B
- US 7622529 B
- US 7671131 B
- US 7524911 B
- US 7662881 B
- US 20060199887 A
- US 7514517 B
- US 7666918 B
- US 7687442 B
- US 7582716 B
- US 7504347 B
- US 20060199983 A

### Non-patent literature cited in the description

- **RANDALL.** *Rev. Macromol. Chem. Phys.,* 1989, 285-297
- **ZIMM, B.H. ; STOCKMAYER, W.H.** *J. Chem. Phys.,* 1949, vol. 17, 1301
- **RUDIN, A.** Modern Methods of Polymer Characterization. John Wiley & Sons, 1991, 103-112
- **WILLIAMS ; WARD.** *J. Polym. Sci.,* 1968, vol. 6, 621
- **MOUREY ; BALKE.** *Chromatography Polym.,* 1992
- **BALKE ; THITIRATSAKUL ; LEW ; CHEUNG ; MOUREY.** Chromatography Polym. 1992
- **ZIMM, B.H.** *J.Chem. Phys,* 1948, vol. 16, 1099
- **KRATOCHVIL, P.** Classical Light Scattering from Polymer Solutions. Elsevier, 1987
- **YAU ; GILLESPIE.** *Polymer,* 2001, vol. 42, 8947-8958